# EUROPEAN PATENT APPLICATION

(11) **EP 1 271 293 A2**
(43) Date of publication of application: **02.01.2003**
(21) Application number: 02254470.4
(22) Date of filing: 26.06.2002
(51) Int. Cl.: G06F 3/00

(54) **A user interface**

(30) Priority: 27.06.2001 GB 0115765
(71) Applicant: Nokia Corporation, 02150 Espoo (FI)
(72) Inventor: Kangas, Kari J., 90570 Oulu (FI); Hoisko, Jyrki, 90570 Oulu (FI)
(74) Representative: Style, Kelda Camilla Karen

(57) **Abstract**

A user interface and a method for providing the user interface is disclosed. In the method a user is provided with a view (11). A real world object (20) that is visible in the view is then selected. A virtual object (22') is also displayed for the user, said virtual object being associated with an action. The user may select the action by moving the view (11) and the virtual object (22') relative to the object (20) such that the object and the virtual object become associated with each other. The user interface may comprise display means enabling the user to see the real world object through the display means. The display means may comprise a head mounted display or a hand-held display.

## Description

The present invention relates to a user interface, and in particular, but not exclusively, to a user interface for interaction with a real world object.

A user may wish to interact with a device without e.g. touching a control button of the device. For example, a user may wish remotely control a device such as a domestic appliance, an office appliance, a vending machine, an entrance gate, and so on. Conventionally the control instructions have been provided by operating a control means provided either on the device or on a specific remote controller of the device. The interaction may also comprise other tasks such as communication of information between the user and the device and so on. The skilled person is familiar with the operation of such conventional user interfaces and thus these are not be discussed in any great detail herein.

It has been proposed that the user interface could be provided based on the so called augmented reality (AR) arrangements. The term augmented reality refers generally to arrangements wherein a real-world view and a computer generated view can be combined. The combining may be seamless so that the view perceived by the user through the display equipment is a combination of objects in a real-world image and computer-generated i.e. virtual objects. Conventionally the augmented reality has been used for enabling a user to receive information regarding the environment he/she is looking at. An augmented reality display equipment may comprise a head mounted display device.

In a prior art approach a virtual object such as a menu or a text message may be shown to the user on the display. The user may then use an input device to interact with the virtual object. The input device may comprise an one-hand mouse, a scroller, a keyboard, a joystick or similar known device. For example, the user may push a joystick upwards or downwards. This will then scroll the displayed menu up or down, respectively. The approach requires the user to use at least the other hand to operate the device. The coupling between the user input and the presentation device indirect and thus is it not provided in an intuitive or straightforward manner.

In another prior art approach a set of virtual objects (e.g. menus or a set of activation buttons) representing possible actions is displayed to the user. The user may then move the virtual objects on the display so that the desired virtual object is located in a specific location (e.g. in the centre) of the field of view of the user. The user may then select the action by pressing a button or by some other input device. However, the method requires the eyes of the user to be focused to the virtual object when selecting the desired action. Thus the user may loose his/hers visual contact with the real world object. In other words, the user may not be able to see the real world object while selecting the action.

The user may also use his/her hand to point to virtual objects that represent possible actions and are visible in the field of view of the user. The system computes which object was pointed at and after the computations performs the specified action. A drawback of this type of arrangements is that the hand needs to be recognised by the system or there needs to be at least a set of sensors to detect the position of the hand in a three dimensional (3D) space relative to the head of the user. Hands-free operation is by definition impossible. Using pointing gestures may cause hand injuries or other accidents (e.g. pushing a coffee cup off from the table) when deeply focused to the augmented reality content. Using pointing gestures may be socially unacceptable in certain situations and may be a subject of different user preferences. For example, some people may not want to use gestures because they may fear that this could make them look strange.

The user may also use a voice activation system for giving commands. However, spoken commands may not always be used. For example, voice commands may be socially unacceptable in certain situations, such as in a theatre or other public places. Voice commands may also not be desired in other circumstances wherein silence and/or secrecy is required, e.g. in certain police or military operations.

The inventors have found that there may not be any satisfactory solution for a user to intuitively and conveniently interact with real world objects in his/her environment. The user may also wish to interact with various real world objects with embedded computing capabilities such as domestic appliances with a Bluetooth™ connectivity. A problem is how casual interaction, i.e. interaction which lasts only a substantially brief moment could be implemented.

Embodiments of the present invention aim to address one or several of the above problems.

According to one aspect of the present invention, there is provided a method of providing a user interface, the method comprising: providing a user with a view; selecting an object that is visible in the view; displaying a virtual object for the user, said virtual object being associated with an action; and selecting the action by moving the view and the virtual object relative to the object such that the object and the virtual object become associated with each other.

According to another aspect of the present invention there is provided a user interface comprising display means, the display means being adapted for displaying a virtual object for a user and enabling the user to see a real world object through the display means, wherein the user is enabled interact with the object by moving the display means relative to the real world object such that said virtual object is associated with the real world object.

In more specific forms of the invention the user is provided with a head mounted or a handheld display device comprising a see-through display.

The object may be elected by positioning it within a selection area of the view. The object may be selected automatically after the object has been held in said selection area for a predefined period of time. The selection may also be triggered by the user.

The object may send a signal. The object may be recognised based on the signal. The object may be identified based on the signal.

The object may also be recognised by a camera means. The recognition and/or identification of the object may be based on pattern or shape recognition. The pattern may comprise a barcode.

The virtual object may comprise an area in the view.

The association between the object and the virtual object is provided by aligning the objects with each other.

An action may be selected after the association between the object and the virtual object has been maintained for a predefined period of time. The user may confirm that the object shall be subjected to an action that is indicated by said association between the object and the virtual object.

The object may be subjected to at least one control operation in response to said selection of action.

Information associated with at least one possible action may be communicated between the object and a control entity of the display means. Such information may also be stored in a control entity of the display means and/or communicated via a data network to a control entity of the display means.

The embodiments of the invention provide the user with an easy way to interact with real-world objects. The embodiments provide a strong visual coupling between a selected real-world object and an object representing an action the user wishes to be taken. The user may use subtle head movements or otherwise move the image window he/she sees relative to the object to obtain a desired effect. The interaction may not distract other people. A completely hands-free operation is provided by some of the embodiments. The system is also substantially easy to use. Relatively intuitive operation may be provided. If the user's environment is provided with a plurality of devices that can be tele-operated by the user the user may be provided with an easy way to control or otherwise interact with these devices.

For better understanding of the present invention, reference will now be made by way of example to the accompanying drawings in which:
Figure 1 shows one embodiment of the present invention;
Figures 2a and 2b show views as seen by a user of the Figure 1 device in accordance with an embodiment of the present invention;
Figures 3a to 3d show a further embodiment of the present invention;
Figure 4 is a flowchart illustrating the operation of one embodiment of the present invention; and
Figure 5 shows a handheld device embodying the present invention.

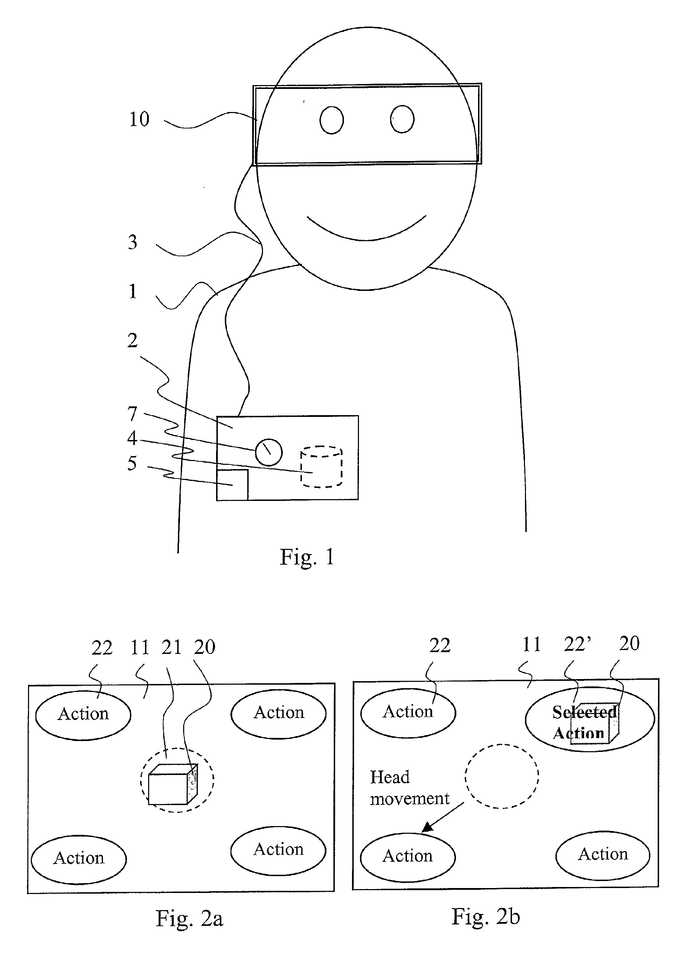

Reference is made to schematic Figure 1 which shows an embodiment of the present invention. In the embodiment a user 1 is provided with a head-mounted see-through display (HMD) 10 and a control unit 2 for controlling the display. The head mounted displays are known as such and are thus not described in any great detail herein.

The display means is adapted to enable the user to experience augmented reality (AR). The display means is also adapted to provide the user with a user interface (UI) for use in interaction with real world objects.

An appropriate communication connection 3 is provided between the display unit 10 and the control unit 2. The control unit may be attached by any appropriate manner to the body of the user. The user may also keep the control unit in his/hers pocket or held the unit in hand. According to a possibility control means are provided in the head-mounted display apparatus.

The user 1 wearing the head-mounted see-through display (HMD) 10 may see the real world view he/she is looking at through the display screen. At the same time additional information can be presented to the user 1 by means of at least one virtual object generated by the control unit 2. For an example of the virtual objects, see e.g. Figure 2a.

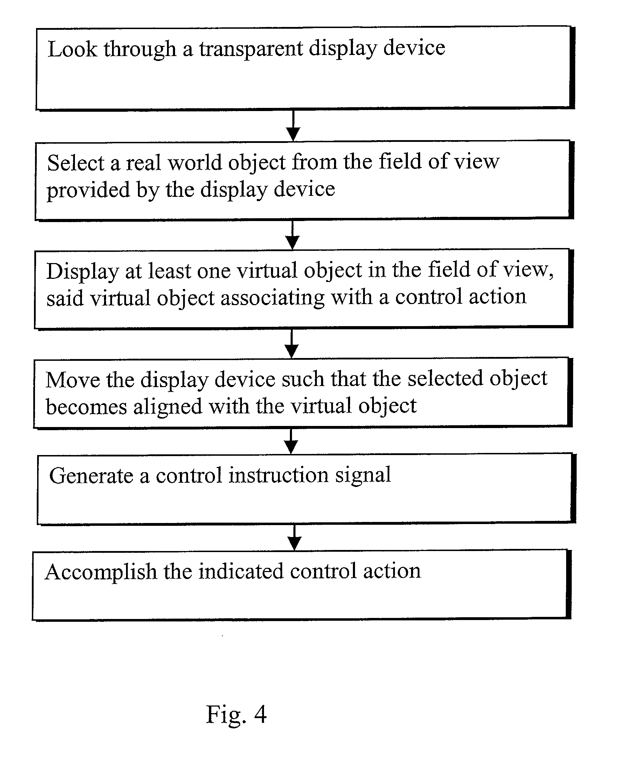

The additional information may associate with the view the user is looking at or the environment the view relates to. As shown by Figure 4, the additional information may also associate with control instructions the user is enabled to give for the real world object he/she she is looking at. The additional information may also be any other information the user is interested in receiving at the same time he/she is looking through the head mounted see-through display 10.

The user may be viewing through transparent display means an object with which he/she wishes to interact. Figure 2a shows a field of view or window 11 the user 1 sees through the display means 10. A real world object 20 appears in the middle of the view 11. Four computer generated virtual objects 22 also appear in the field of view 11. A virtual object 22 may comprise e.g. a clearly visible selection area. The selection area is shown to have an oval shape in Figures 2a and 2b. It shall be appreciated that the virtual objects may comprise any graphical logos, "icons" and so on.

The user may use the virtual objects 22 for interaction with the real world object 20. For example, the user may control a device by selecting an action represented by the virtual object. Possible implementations of the virtual objects will be explained in more detail after the following explanation of the principles of an embodiment of the present invention.

In accordance with an embodiment the user 1 may interact with real-world objects in the nearby environment of the user by first selecting a desired real world object 20. The selection may be accomplished by looking at the object 20 so that the object appears in a specific point or area 21 of the view 11. For example, the object may be positioned in a selection area located in the center of the view. Naturally, the selection area 21 may be located in any location of the viewing window 11.

Although not necessary in all applications, the object 20 may be adapted to facilitate recognition thereof by the augmented reality system. More particularly, the control unit 2 such as a wearable computer may recognise when a real world object is visible in the field of view 11. To implement this the object 20 may contain, for example, means such as a directional RF transceiver, an infrared beacon, visual tags (e.g. barcodes or specific patterns) and so on. The object 20 may also have a distinct visual appearance which allows it to be easily tracked and recognised e.g. by a camera or other detection means.

In addition, the object 20 may be provided with means which allow communication between the augmented reality system and the object 20. For example, the object 20 and the control unit 2 may each be provided with short range radio link modules 5. The communication media between the modules may be based on the Bluetooth™ protocol and transceiver modules.

The recognition and the communication may be implemented by using the same underlying technology. For example, the recognition and the communication may both be based on use of infrared technology such as the ones based on the IrDA protocol or short range radio links such as the Bluetooth™.

The object 20 can be selected automatically for interaction by keeping it in the selection area 21 for a specified period of time. For this purpose the control unity may be provided with a timer function 7. The automatic operation provides the user with hands free operation.

An input device may be required in some applications. For example, the user may wish to have a possibility to manually confirm the selection of an object. However, a substantially simple input device may be enough. For example, the user may initiate the procedure and activate the user interface by pressing a control button or operating other appropriate control means, e.g. voice activation means. The activation may be accomplished while the object 20 appears to be in the selection area 21.

There are various alternatives for the implementation of the control means. For example, a control means such as a control button or similar may be embedded in the clothing of the user or the control means may be provided by a hand held control device. The control means may also be provided on the control unit. The user may also operate the user interface by using some specific gesture or muscle movement, or by a voice command and so on.

Once the object 20 has been selected the system may indicate this for the user. For example, a successful selection may be indicated by visual, audible, or tactile signals.

One or more possible control actions can be displayed to the user by appropriate visual virtual objects 22 in the field of view of the user. The possible actions may be presented by using graphical symbols. The symbols i.e. "icons" may comprise text, images (e.g. logos), a combination of text and images and so on. The virtual objects 22 are referred to in the following as action drop areas.

The information associated with the possible actions may reside in the augmented reality system. For example, the information may be stored in a database 4 of the control unit 2. At least a part of the required information may also be downloaded from the real-world object via a communication media between the object and the user device. At least a part of the information may be downloaded from a remote data storage means such as a server. The downloading may occur via appropriate data network such e.g. the Internet, a local area network and so on. It is also possible that the required information is obtained from several sources by using any combination of above techniques or by any other appropriate technique.

After having selected the object 20 the user 1 may move his/hers head (see the arrow in Figure 2b) so that the selected object 20 appears in association with an action drop area 22' in the field of view 11. More particularly, the possible actions (i.e. the drop areas 22) may be made visible in the view 11 after selection of the object. After this the user 1 can select the desired action by moving his/hers head so that the object 20 and a desired action drop area 22 become aligned. In Figure 2b an indication of the selection is given by displaying the virtual object 22' such that it is larger than the other virtual objects 22.

The control unit 2 may notice the selection of the action by tracking the real word object 20 and computing where the object 20 is located in the field of view 11. The selection of the action may be detected automatically once the control unit 2 notices that the real world object 20 is aligned with an action drop area 22. The timer 7 may be used for ensuring that an action drop area has not been selected accidentally. Alternatively, as with the selection area 21, the user 1 may indicate the moment when the object 20 is aligned with a desired drop site 22 by using a button or some other control means.

In response to the indication the control unit 2 resolves which one of the action drop areas 22 is aligned with the object and initiates a corresponding action. Once the desired action is resolved the augmented reality system may carry out the desired action. This may involve communication with the real world object and/or with remote servers or any other action. The action shall be understood to refer to any action which may be accomplished in response to an instruction from a user.

The system may be provided with means for tracking the movements of the user's head. This is for tracking the relative movement between the view 11 and the real-world object 20 and/or to detect if the real-world object 20 in the environment is aligned with a drop area 22. Such tracking means as such are known and will not be described in any greater detail. It is sufficient to note that the tracking can be provided e.g. by means of an electronic compass, a gyroscope, by tracking an infrared beacon associated with the object by means of a sensor-array, by using a camera to visually track the object or the infrared beacon associated with the object and so on. A combination of more than one tracking technique may also be used.

Active tags i.e. tags which actively emit signals to the nearby environment may be used. For example, the tracking of the object 20 may be implemented by using an infrared beacon attached to the real-world object 20. The beacon may then be tracked by using an infrared sensitive camera. The beacon generation means may encode the identity of the object to the emitted signal. A drawback of using active tags may be that they may require replacement/recharging of batteries if the object are not connected e.g. a to power outlet or are not energy self-sufficient (e.g. powered by a sun-power, wind power and so on).

It is also possible to use passive tags i.e. tags which do not actively emit any signals to the nearby environment. One way to implement tracking of the passive tags is to use camera arrangement that is adapted to track an object. For example, the object may have a distinct marking, e.g. 2D barcodes or a specific pattern which helps to detect and track the object. Similarly, the object may have distinct visual appearance which can be used to track it.

Information based on which it is possible to visually track an object (e.g. 2D barcode ID or visual appearance information) can be stored at the storage means 4 of the controller unit 2. The information may also be mediated to the augmented reality system before initiation of the tracking procedure. For example, the real-world object 20 may send the 2D barcode ID thereof or visual appearance information to the augmented reality system by using a local short range radio link. The identity data may contain encoded address information such as a universal resource locator (URL) which may then be used to obtain information from a data network, such as the Internet.

The augmented reality system may be enabled to use the tracking feature only when the user indicates a desire to interact with an object in the visual environment of the user. In an automatic mode the augmented reality system may be activated only if a predefined real-world objects is detected to be present in the view. For example, the tracking should only be initiated when a short range radio link or an infrared beacon or other triggering event is detected.

The system may distinct the various areas of the view 11 by means of different visual appearance of the different areas. For example, the selection area 21 and/or the action drop areas can be displayed to be visually different from each other in the view 11. This may be accomplished e.g. by displaying a semitransparent coloured or shaded areas 21, 22 in the view 11. The view 11 may also be provided with a pointer element such as an arrow or the like, said pointer element being an indication of the area where the real world object shall be placed.

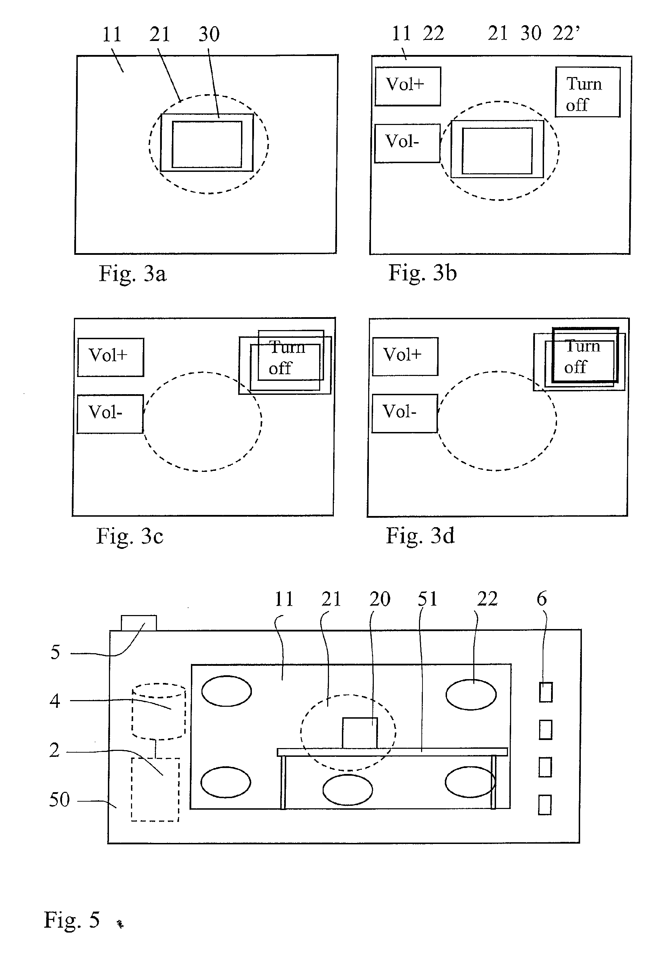

A reference is now also made Figures 3a to 3d which illustrate a more specific example of such interaction and to the flowchart of Figure 4. More particularly, Figures 3a to 3d illustrate a specific example wherein the user interface is used to control a television set 30.

A user provided with a head mounted display apparatus may move his/hers head so that the TV set 30 is visible in the center area of his field of view (Figure 3a). The TV set 30 is provided with means that emit an infrared beacon. The beacon allows the user equipment to detect the position of the TV set 30 relative to the field of view of the user.

In Figure 3b the user selects the TV set 30 for interaction. Subsequent to the selection the system may display virtual icons 22, 22' that each represent a possible action the user may take. That is, in the example the user may adjust the volume of the TV set or switch off the TV set.

In Figure 3c the user 1 has moved his head so that the TV set 30 appears to be behind the desired action drop area. In the example control action object "turn off" 22' is selected. After a predefined time has expired after the alignment of the TV set 30 and the action object 22 the corresponding action is performed i.e. the TV set is switched off. The action may be initiated by a control entity of the user equipment which may generate and transmit a control instruction signal to the TV set.

Figure 3d shows a situation wherein the selected icon has a stronger appearance in order to provide the user with an indication that the selection has been done and is accepted. It may be advantageous in some application that the user needs first e.g. to release a button or otherwise indicate that he/she accepts the action to be performed.

It should be appreciated that whilst embodiments of the present invention have been described above in relation to head mounted displays, embodiments of the present invention are applicable to any other suitable type of display equipment. For example, a hand-held display such as a display screen of a camera can be provided with the above described functionality. Such a device may conceptually resemble a hand-held magnifying class which allows the user to see real world objects by looking through the display screen of the hand held device.

Figure 5 shows a handheld device 50 provided with a transparent display 11. An real world object 20 (e.g. a household appliance) is located on top of a table 51. The display window 11 is positioned such that the object 20 is visible in the selection area 21. The user may then select the object 20 by pressing a control button 6. After,the selection the display window 11 is moved such that the object becomes aligned with one of the action activation objects 22.

The handheld device 50 may comprise, for example, a mobile station. The mobile station may be provided with a data processor facility 2 and data storage means 4. The mobile station may also be provided with transceiver means 5 for enabling communication via a wireless interface with another station. The other station may comprise a station provided in association with the real world object or e.g. a base station of a communication system.

It is also possible to control the location and/or appearance of the selection area and the action drop areas. For example, it may be advantageous to move the virtual objects closer to each other when the real world object is substantially far away. By means of this it is possible to control the length of movement of the view that is required to bring the real world object into association with a virtual object.

It is also noted that instead of aligning the real world object and the displayed virtual object, it is also possible to provide other type of visible association between the objects. For example, the user may move the field of view such that the real word object and the virtual object can be seen to be located within a predefined area, e.g. in one corner or side of the view.

The proposed augmented reality arrangement allows the eyes of a user to be focused to the selected real-world object at the same time whet the user is selecting a desired action. Thus a strong visual binding may be provided between the object and the selected action. In other words, the user is able to see that the object and the desired action actually become associated in his/her field of view. The user does not necessarily need to perform any pointing gestures, press any buttons or give any voice commands. The user may control remotely with any object that is provided with appropriate means for enabling control thereof by means of the above described system.

Processing associated with the recognition and/or selection of the object and/or the detection of the association of the object with the virtual object does not necessarily require much processing capacity. This is so since the image area to be analysed is substantially small.

It is noted herein that while the above describes exemplifying embodiments of the invention, there are several variations and modifications which may be made to the disclosed solution without departing from the scope of the present invention as defined in the appended claims.

## Claims

1. A method of providing a user interface, the method comprising:
providing a user with a view;
selecting an object that is visible in the view;
displaying a virtual object for the user, said virtual object being associated with an action; and
selecting the action by moving the view and the virtual object relative to the object such that the object and the virtual object become associated with each other.

2. A method as claimed in claim 1, wherein the user looks the view through a see-through display means.

3. A method as claimed in claim 2, wherein the user is provided with head mounted display means.

4. A method as claimed in claim 2, wherein the user is provided with hand-held display means.

5. A method as claimed in any preceding claim, wherein said selection of the object comprises a step of positioning the object within a selection area of the view.

6. A method as claimed in claim 5, wherein the object is selected automatically after the object has been held in said selection area for a predefined period of time.

7. A method as claimed in claim 5, wherein the selection of the object in said selection area is triggered by the user.

8. A method as claimed in any preceding claim, wherein the object sends a signal.

9. A method as claimed in claim 8, wherein the object is recognised based on the signal.

10. A method as claimed in claim 8 or 9, wherein the object is identified based on the signal.

11. A method as claimed in any of claims 8 to 10, wherein the signal is transmitted via an infrared link or a short range radio link.

12. A method as claimed in any preceding claim, wherein the object is recognised by a camera means.

13. A method as claimed in claim 12, wherein the recognition and/or identification of the object is based on pattern or shape recognition.

14. A method as claimed in claim 13, wherein the pattern comprises a barcode.

15. A method as claimed in any preceding claim, wherein the virtual object comprises an area in the view.

16. A method as claimed in any preceding claim, wherein the association between the object and the virtual object is provided by aligning the objects with each other.

17. A method as claimed in any preceding claim, wherein said action is selected after the association between the object and the virtual object has been maintained for a predefined period of time.

18. A method as claimed in any preceding claim, wherein the user confirms that the object shall be subjected to an action that is indicated by said association between the object and the virtual object.

19. A method as claimed in any preceding claim, wherein the object is subjected to a control operation in response to said selection of action.

20. A method as claimed in any preceding claim, wherein information associated with at least one possible action is communicated between the object and a control entity of the display means.

21. A method as claimed in claim 20, wherein the communication occurs via a short range radio link.

22. A method as claimed in any preceding claim, wherein information associated with at least one possible action is stored in a control entity of the display means.

23. A method as claimed in any preceding claim, wherein information associated with at least one possible action is communication via a data network to a control entity of the display means.

24. A user interface comprising display means, the display means being adapted for displaying a virtual object for a user and enabling the user to see a real world object through the display means, wherein the user is enabled interact with the object by moving the display means relative to the real world object such that said virtual object is associated with the real world object.

25. A user interface as claimed in claim 24, wherein the display means comprises a head mounted display.

26. A user interface as claimed in claim 24, wherein the display means comprises a hand-held display.

27. A user interface as claimed in any of claims 24 to 26, wherein the display means is adapted to display a selection area.

28. A user interface as claimed in claim 27 adapted to select the real world object automatically after the real world object has been held in said selection area for a predefined period of time.

29. A user interface as claimed in any of claims 24 to 29, comprising means for receiving a signal from the real world object.

30. A user interface as claimed in any of claims 24 to 29, comprising a camera means for detection of the real world object.

31. A user interface as claimed in any of claims 24 to 30, wherein the virtual object comprises an area in the field of view of the display means.

32. A user interface as claimed in any of claims 24 to 31, wherein the association between the real world object and the virtual object is provided by aligning said objects with each other.

33. A user interface as claimed in any of claims 24 to 32 adapted to select an action after the real world object and the virtual object have been associated with each other for a predefined period of time.

34. A user interface as claimed in any of claims 24 to 33, comprising means for receiving information associated with at least one possible action from the real world object.
